# EUROPEAN PATENT SPECIFICATION

(11) **EP 0 720 276 B1**
(45) Date of publication and mention of the grant of the patent: **24.03.2004**
(21) Application number: 95307665.0
(22) Date of filing: 27.10.1995
(51) Int. Cl.: H02M 1/00

(54) **Single phase input hybrid rectification circuit**
Hybrides Gleichrichtungsschaltkreis mit einphasigem Eingang
Circuit de rectification hybride à entrée monophasée

(30) Priority: 29.12.1994 JP 34119694
(43) Date of publication of application: 03.07.1996
(73) Proprietor: I-HITS LABORATORY, Yokohama (JP)
(72) Inventor: Suzuki, Yasunobu, Koganei-shi, Tokyo (JP); Teshima, Toru, Yokohama (JP)
(74) Representative: Tomlinson, Kerry John

(56) References cited:
- US-A- 5 113 337
- US-A- 5 119 283
- US-A- 5 283 727
- IBM TECHNICAL DISCLOSURE BULLETIN, vol. 35, no. 4A, September 1992 NEW YORK US, pages 70-71, 'POWER FACTOR CORRECTION WITH AC PASSIVE SIDE ELEMENTS'

## Description

### FIELD OF THE INVENTION

This invention relates to a single phase input hybrid rectification circuit which is useful for power saving for DC or AC output equipments, such as videos, audios, electronic apparatus like communications equipments, computers, office automation machines like copy machines, air conditioners, cooking machines, lighting apparatus, industrial motor controllers or uninterruptible power supplies.

### PRIOR ART

Until today, the switching power supply is popularly used for videos, audios, electronic equipments like computers, air conditioners, cooking machines, lighting apparatus, industrial motor controllers, or AC output devices like uninterruptible power supply units. And the demand for switching power supplies is rapidly increasing because of improved switching semiconductors, proprietary control LSI or improvements in the HF characteristics of capacitors and magnetic materials. However, recently it has been pointed out that harmonic currents caused by switching power supplies cause electro-magnetic interference to commercial power lines.

It has also been pointed out that low power factor caused by switching power supplies causes a waste of energy resources. These problems are now receiving the attention of advanced countries as a common problem.

Nowadays, the IEC (International Electrotechnical Commission) has decided to regulate harmonic current caused by switching power supplies and low power factor, and guidelines by the Japanese Government are also required.

For example, concerning Regulation No. IEC1000-3-2 of the IEC Regulations, the objects of regulations are divided into 4 classes, Class A for 3 phase input equipments, Class B for motor tools, Class C for lighting apparatus and Class D for specialized equipments which have peak power not exceeding 600 watts.

Therefore, Electronic equipments except a kind of air conditioner and almost all DC output equipments are involved in Class D.

The especially important regulation of these regulations on harmonic current is on single phase capacitor input type rectifier circuits, generally used for switching power supplies.

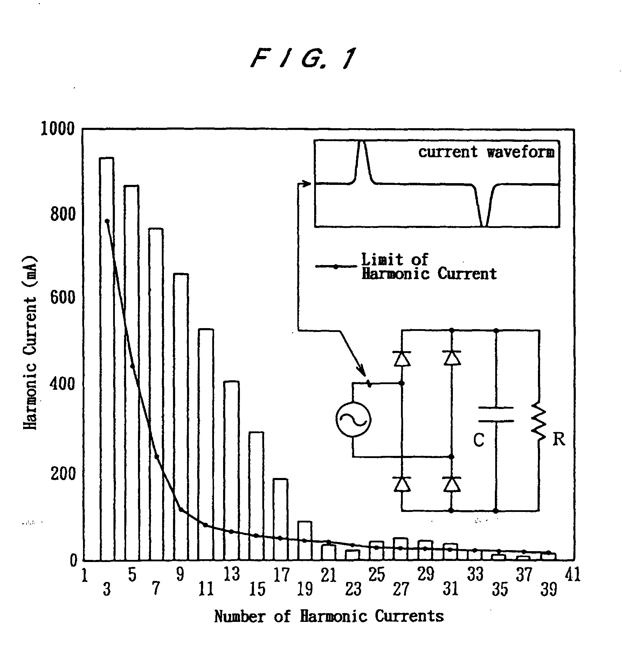

For example, Fig. 1 shows that concerning a single phase capacitor input type rectifier circuit used for TV (230V, 230W) for the European market, the harmonic current value of all odd order harmonics from the third harmonic to the 19th harmonic largely exceeds the IEC Standard which is shown with a solid line. Products with such switching power supply are likely to be unable to be sold in future.

Until now, several circuits have been suggested as guidelines against the regulations on harmonic current. Among them, an input choke coil circuit, one transistor converter circuit (input capacitorless circuit), and active filter method are generally used.

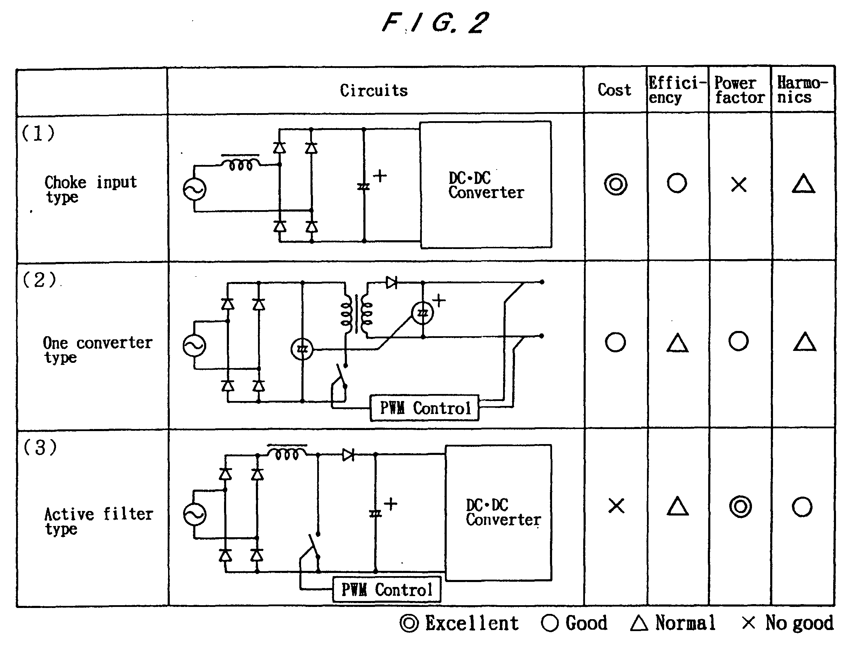

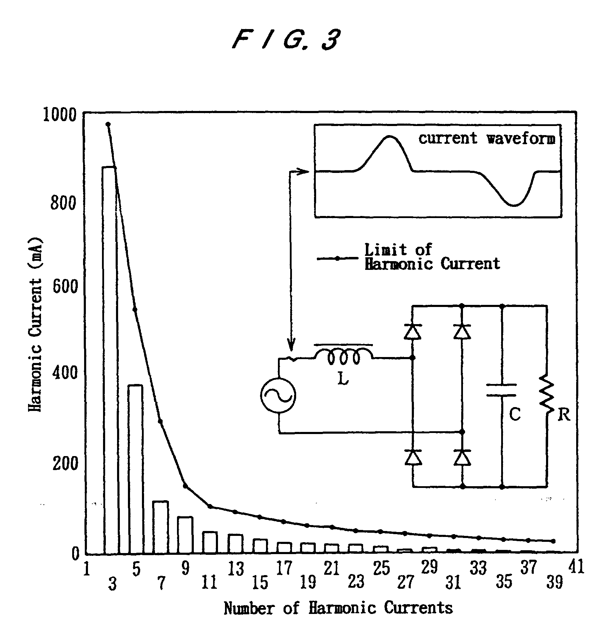

An input choke coil circuit has a circuit configuration as shown in Fig. 2 (1) for example, and a choke coil is inserted on the AC input side. This configuration just meets the above-mentioned IEC Standard. For example, when a choke coil is inserted into the input side of a single phase capacitor input type rectifier circuit used for TV (230V, 230W) for Europe as shown in Fig. 3, harmonic current values of all odd order harmonics from the third harmonic to the 19th harmonic are lower than the IEC Standard which is shown with a solid line.

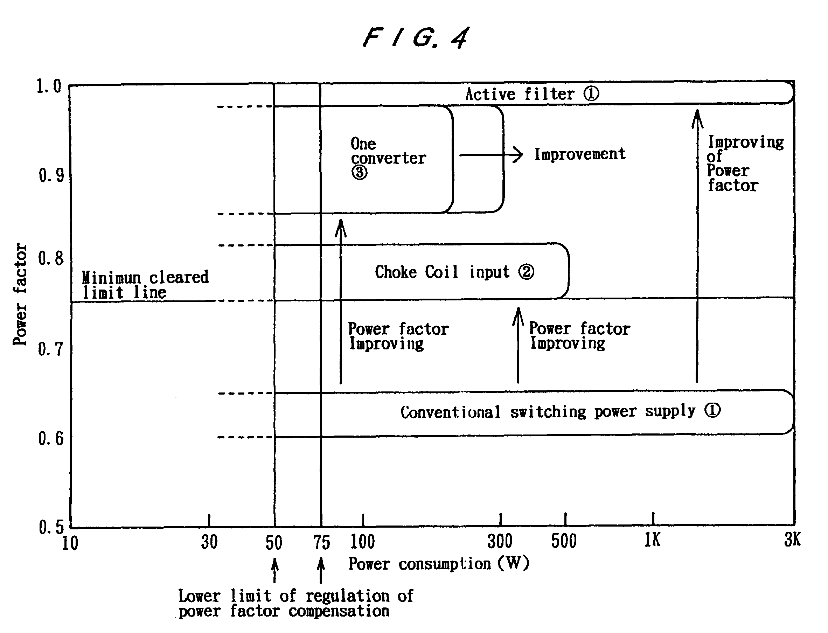

However, the power factor of an input choke coil circuit is generally 0.75 - 0.8 as shown in Fig. 4, for example, which meets the lowest value, 0.75, of the IEC Standard, but it is not enough. Still there is a high apparent power.

It is clear that the occurrence of harmonic current in an input choke coil circuit is caused by charging current of a capacitor directly connected with the full bridge rectifier output. Accordingly, pulse width modulation (PWM) switching technology without a large capacitor has been tried.

The types of circuit for pulse width modulation are divided into the one transistor converter circuit or the active filter circuit.

The one transistor converter circuit has a circuit configuration as shown in Fig. 2 (2) for example. It has some advantages as to cost, conversion efficiency, power factor, or powerline harmonic, but also has a weak point that it is unable to produce output power when the AC input voltage instantaneous value is at around 0. Consequently, it is available only for apparatus not exceeding approx. 300 W.

Moreover, the one transistor converter circuit has a great weak point that noise at high-speed switching leaks to the AC power supply side because of lack of a large capacitor at the power supply side.

Accordingly, the switching power supply using the one transistor converter circuit is considerably limited as to use.

On the other hand, the active filter circuit has a circuit configuration shown in Fig. 2(3). In this method, though the power factor comes to nearly 1, it has a weak point that another DC-DC converter is necessary in addition to a power factor improved switching circuit and lower efficiency is unavoidable on the whole because output voltage is difficult to be produced when the AC input voltage is at around 0 and ripple (AC component) occurs in the output power.

As stated above, guidelines against harmonic current limitation and improvement in power factor of the conventional switching power supply accompany negative factors such as increase of cost, decrease of conversion efficiency or increase of size and weight.

US-A-5345164 describes a prior art rectifier. The preamble to claim 1 is based on this document.

### SUMMARY OF THE INVENTION

This invention aims to provide several single phase input hybrid rectification circuits with limitation free power capacity range to overcome the conventional technical problems and improve radically conversion efficiency, power factor and powerline harmonics.

To solve the above problems, the present invention provides a single-phase-input rectifier according to claim 1.

Thus a single phase input fundamental and harmonic component hybrid rectification circuit having higher efficiency than a conventional single phase full bridge rectifier circuit is obtained by rectifying the ripple power (harmonic component) and adding the auxiliary rectified DC component to the fundamental DC component.

In a preferred embodiment, the circuit further includes an LC step-up filter composed of a step up secondary coil and a smoothing capacitor to obtain the ripple voltage of the first rectified voltage being filtered stepped-up at the secondary coil.

Certain embodiments of the invention will now be described by way of example and with reference to the accompanying drawings, in which:
Fig. 1. shows a relation chart illustrating the relation between number and value of harmonic current in the conventional circuit.
Fig. 2. shows circuit configurations illustrating the conventional methods.
Fig. 3. shows another relation chart illustrating the relation between number and value of harmonic current in the conventional circuit.
Fig. 4. shows a relation chart illustrating the relation between electric power consumption and power factor based on the conventional circuit.
Fig. 5. shows illustrative circuit configurations and explanation of the output voltage waveforms.
Fig. 6. shows an explanation chart of DC output voltage values and waveforms of circuits shown in Fig. 5.
Fig. 7. shows a comparison of the basic and improved LC filter type rectifier circuits of actual examples of this invention.
Fig. 8. shows an actual example of this invention for an input-output non-insulated high frequency hybrid rectification circuit.
Fig. 9. shows an actual example of this invention for an input-output insulated high frequency hybrid rectification circuit for small capacity with a one transistor type.
Fig. 10. shows an actual example of this invention as the same circuit as Fig.9, but for large capacity with a push-pull transistor type.
Figs. 11A-C. show actual examples of the circuit shown in Fig.6, Fig.7 and Fig.9 when commonly used with 100/115V and 200/230V supplies.

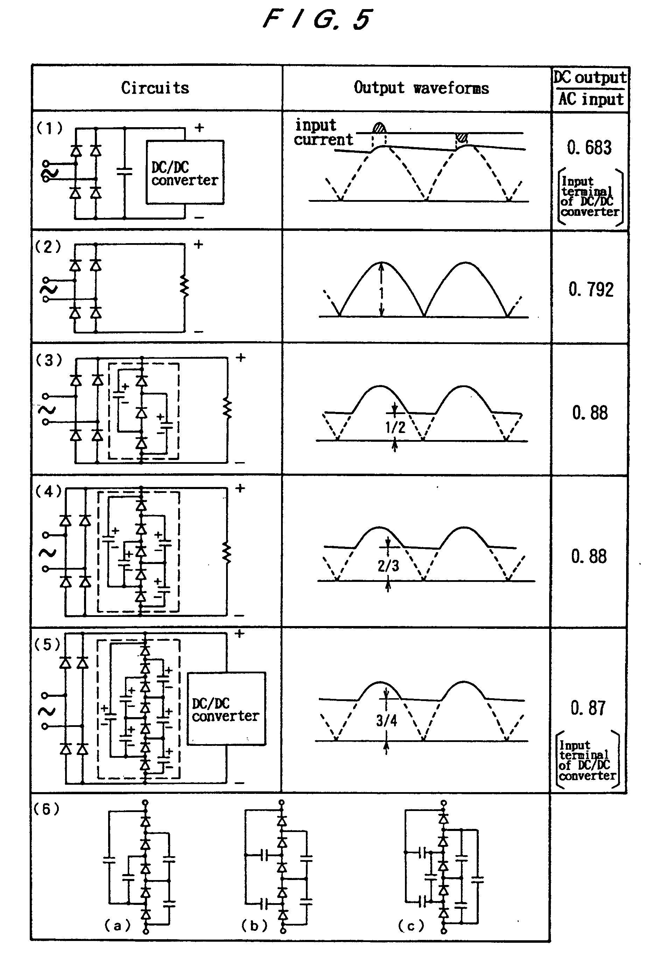

Fig. 5 shows an example circuit configuration compared with the conventional circuit.

This invention is able to realize higher rectifier efficiency than the conventional circuits, and make power saving of several DC or AC output equipments possible by using the above single phase input rectifier.

The concrete circuit and its active effects are shown below as actual examples.

Fig. 5 shows an example of circuit configurations.

Fig. 5 (1) is a generally used capacitor input type rectifier circuit, in which input power factor is lowered because smoothing is conducted only by a high capacity condenser on the DC output side and charging current is concentrated to the peak values of the sine curve AC voltage within a short time as stated before.

Fig. 5(2) is a standard single phase full bridge rectifier circuit, in which input power factor is 1 and efficiency is approx. 79% because the voltage drop for 2 diodes is deducted from the theoretical value 8/Π²= 81%.

The portion of Fig. 5(3), Fig. 5(4) and Fig. 5(5) encircled by a dot line is an auxiliary rectifier circuit which can produce additional DC power by combining capacitors with diodes and by smoothing the ripple power (harmonic component).

As the smoothing DC output power produced through an auxiliary rectifier circuit is put in parallel to the output of a single phase full bridge main rectifier circuit as shown in Fig. 5(3)-Fig. 5(5), rectified power is supplied to a DC load from an auxiliary rectifier circuit only while the absolute value of input AC voltage is lower than the output voltage value of an auxiliary rectifier circuit.

That is, the auxiliary rectifier circuits shown in Fig. 5(3)-Fig. 5 (5) actively increase the efficiency to rectify and smooth ripple voltage (harmonic component) just like the smoothing capacitor of Fig. 5 (1).

Therefore, it is possible to obtain higher efficiency than the circuits of Fig. 5(1) or Fig. 5(2) because the rerectified ripple power is recycled by the auxiliary rectifier circuit.

The rate is improved by 8-9% over the standard efficiency 79% of Fig.5(2) due to the number of circuit elements. (When 79% is the standard, the rate is 10-11%).

The measurement value shows that the input AC current (apparent power) of the circuit shown in Fig. 5(3)-Fig. 5(5) is reduced by 27-29% under the same DC output power compared with the conventional capacitor input type rectifier circuit shown in Fig. 5(1). This measurement value is confirmed by experiment which altered the same type of popular commercial DC-DC converter in Fig. 5(1) to the circuit shown in Fig.5 (5).

And, by using this rectifier circuit in the Fig. 5(3) for the rectifier circuit of the above-mentioned one transistor converter circuit or active filter circuit instead of the circuit in Fig. 5(2), the ripple voltage involved in the DC output voltage and the peak value of switching noise are extremely reduced and the output capacity range is almost limitation-free. The circuits shown in Fig. 5(6) - - (a), (b), (c) are possible auxiliary rectifier circuits.

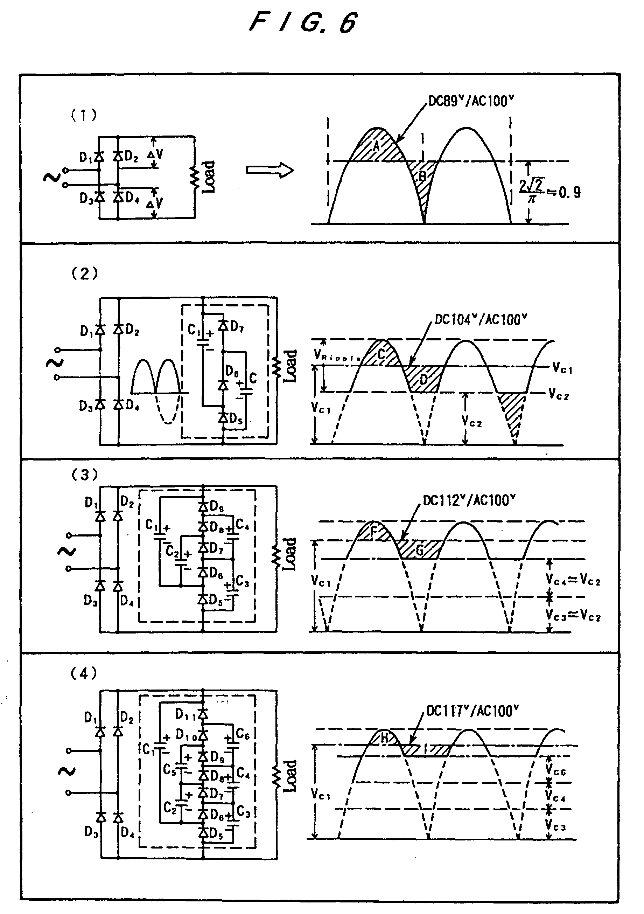

Fig. 6 shows the relation between auxiliary rectifier terminal voltage and DC output voltage under actual use for Fig. 5 (3),(4) and (5). A and B of Fig. 6 show the ripple voltage of the conventional single phase full bridge rectifier circuit, and C & D, F & G and H & I show the ripple voltage under actual use for the circuit.

Seeing from Fig. 6, it is clear that ripple is reduced by adding the auxiliary rectifier circuit composed of capacitors and diodes. However, improvement in efficiency of the circuit is saturated because efficiency is reduced by the voltage drop of the diodes, even if the number of elements is increased above the actual example of Fig. 6 (4). Accordingly, the circuit of Fig.6 (4) or a circuit with another booster circuit are suitable to increase cost performance and to reduce a volume and input current (power).

And, the lowest and highest elements of the diodes for the auxiliary rectifier need high voltage elements because input AC voltage is directly applied when AC power is on. However, it is possible to reduce power loss caused by forward voltage drop of the diodes by using an element with low voltage but lower forward voltage drop like a shottkey barrier diode because intermediate diodes are exposed to divided voltage.

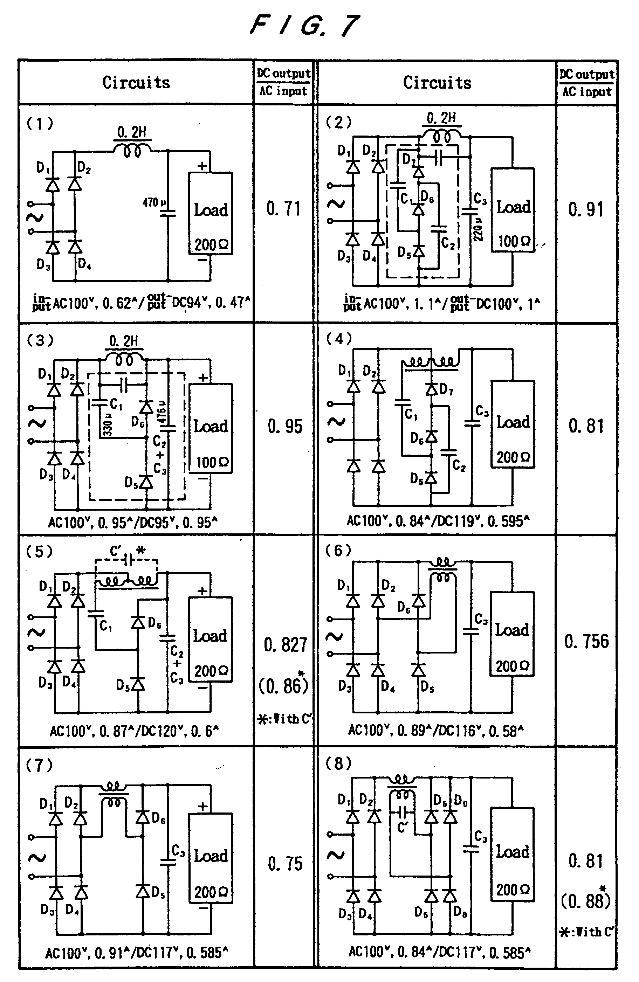

Fig. 7 (1) shows a relatively middle or large capacity rectifier circuit with over 100 W DC output power, which adopts the conventional and popular LC filter. Fig. 7 (2)-Fig. 7 (8) show an actual example of the invented rectification method when used for the above circuit. It is quite natural that the ripple voltage involved in DC output voltage is lower than the examples shown in Fig. 5 and Fig. 6 and it is useful for all kinds of DC power supply.

Fig. 7 (2) shows that improvement in efficiency and decrease of ripple voltage (or power) before smoothing are given by converting ripple voltage to DC voltage in the front stage of a choke coil through an auxiliary rectifier circuit (encircled with a doted line) shown in Fig. 5 and Fig. 6 and by adding it to the output power of a single phase full bridge main rectifier circuit composed of diodes D₁, D₂, D₃ and D₄.

Owing to this, it is possible to decrease the rated capacity of a choke coil in proportion to the decrease of ripple voltage applied to the choke coil, and possible to improve efficiency by reducing internal loss. An auxiliary rectifier circuit encircled by a dot line in Fig. 7 (2) shows the circuit circuit of Fig. 6(2) for example, which is however almost the same as the circuit of Fig.6 (3) or Fig. 6(4). The suitable circuit should be selected depending on cost performance, size or total efficiency.

Fig. 7 (3) shows a rectifier circuit where a capacitor for a smoothing filter in an auxiliary rectifier circuit and a capacitor for an LC filter of a main rectifier circuit are commonly used when the ripple (AC) power occurring on both sides of a choke coil is converted to DC power through the auxiliary circuit encircled with a dotted line, and which is small and has the fewest elements in total and keeps best cost performance.

Fig. 7 (4) shows that ripple voltage in the front stage of a choke coil is decreased over the DC output wave of Fig. 6 (4) in spite of the small number of capacitors and diodes by setting the secondary coil on a choke coil and stepping up the ripple voltage involved in the output power of a single phase full bridge rectifier circuit with auto transformer function, and moreover, by being rectified through an auxiliary rectifier circuit.

Consequently, it is possible to minimize the rated capacity of a choke coil and keep the DC output ripple voltage within the specification to be available for actual use.

Fig. 7 (5) shows a circuit made by reducing the circuit elements of Fig. 7 (4) and simplifying' the circuit to increase cost performance.

Fig. 7 (6) shows a circuit to put the ripple voltage occurring in the secondary coil of a choke coil after being full bridge rectified by D₂, D₄, D₅ and D₆ in parallel to the single phase full bridge rectified output voltage composed of D1, D₂, D₃, and D₄. D₂ and D₄ are commonly used for the main rectifier and auxiliary rectifier.

Though D₁ - D₆ seem to be equivalent to a 3 phase full bridge rectifier circuit, they are not exactly equivalent to a 3 phase full bridge, because D₁ D₄ are supplied with 50Hz input voltage and D₂, D₄, D₅ and D₆ are supplied with 100Hz ripple (harmonic component) voltage which is the second harmonic.

Fig. 7 (7) and Fig. 7 (8) are the transformation. Fig. 7 (8) is a circuit to put auxiliary rectified output power to the DC output side, and Fig. 7 (7) is a circuit to supply a half of the ripple power to each front and later stage of a choke coil.

As stated above, various circuit methods are adopted for this invented efficiency improved method. However, the integrated and common concept is to improve rectifier efficiency by transforming the ripple power (harmonic component), disregarded by the conventional single phase full bridge rectifier circuit, into DC power and by adding to the conventional DC output power.

And, the DC output/AC input value of Fig. 5 and Fig. 7 are confirmed by experiments, and the value shows clearly improvement in efficiency and power factor.

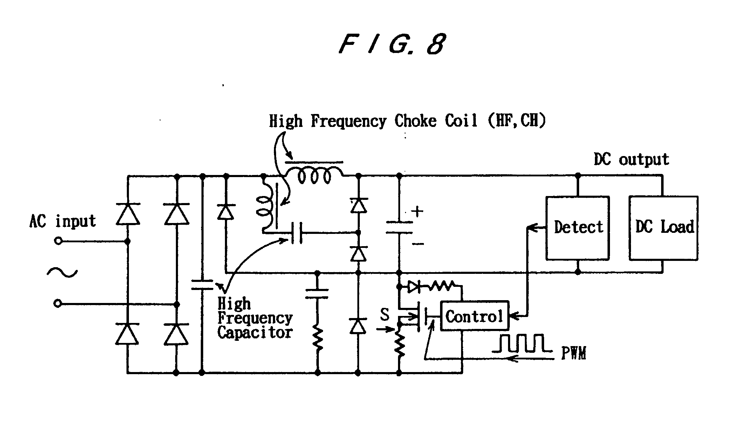

Fig. 8, Fig. 9 and Fig. 10 show other actual examples. That is: Fig. 8 shows an example of an input-output noninsulated high frequency hybrid rectification circuit, which has a characteristic to insert a semiconductor switch (S) between a single phase full bridge rectifier circuit and LC filter and give on-off control to the semiconductor switch (S) at some KHz-some 100 KHz.

This circuit is able to not only PWM control DC output voltage but also greatly minimize the value, capacity and weight of a choke coil (L) and a capacitor (C). Accordingly, it is possible to realize the minimization and light weight for total power supply equipment.

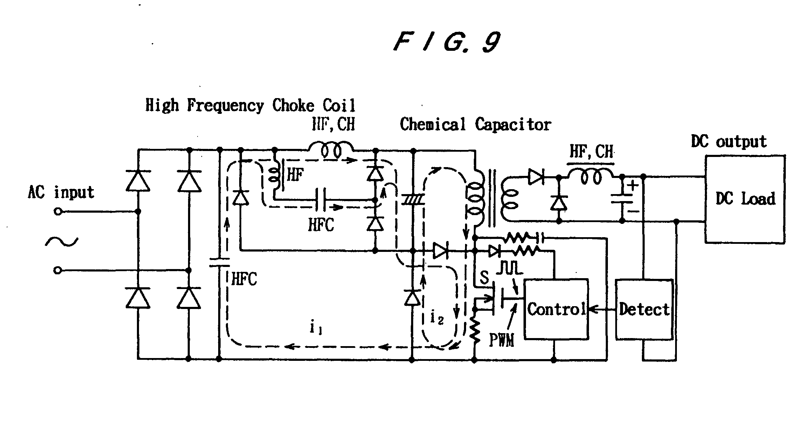

Fig. 9 shows an example of input-output insulated high frequency hybrid rectification circuit DC-DC converter (for small capacity with a one transistor). That is, when the invented method is applied for a DC-DC converter with one transistor type to obtain smoothed DC output power by insulating the AC input side and DC output side, high frequency current (i₁) to charge the high capacity electrolytic condenser on the input side of the DC-DC converter and high frequency current (i₂) to control the output power of the DC-DC converter are summed up and put to the switching transistor (S).

As i₁ and i₂ runs through the route shown with a dotted line and are given pulse width control, the normal ripple voltage occurs in DC load and the same performance as the conventional DC-DC converter is kept. Seeing from the test results, the rate of DC output power and AC input power in the circuit of Fig. 8 is approx. 75-80%, rather lower than the circuit of Fig. 7, though there is some difference depending on the output capacity or the performance of the components used.

Nevertheless, power factor-efficiency are remarkably improved compared with the conventional switching regulator whose rate of DC output power and AC input power is 50-65%. And the harmonics in the low frequency zone (3rd to 19th) involved in the input current is fully reduced and meets the IEC Standard.

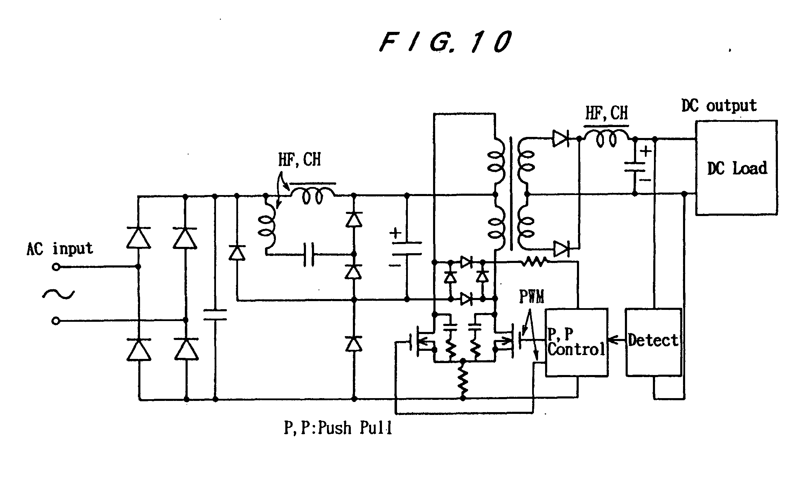

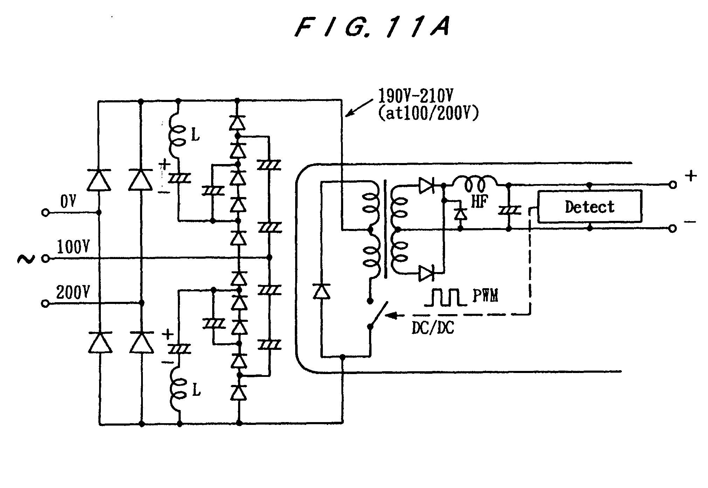

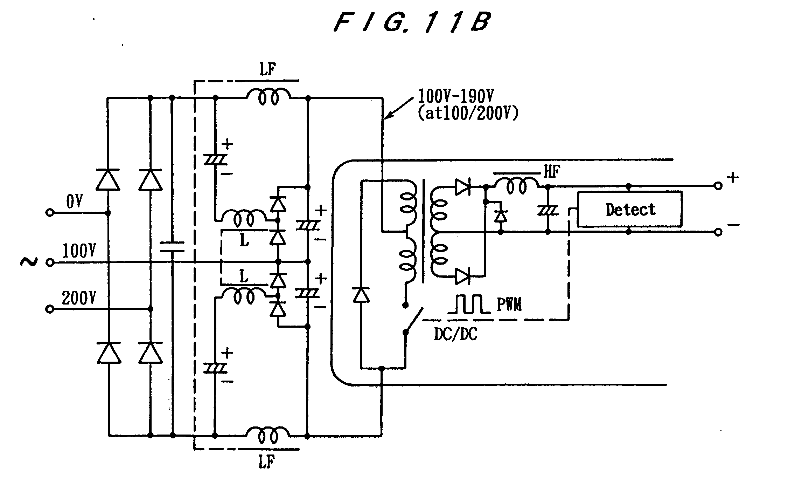

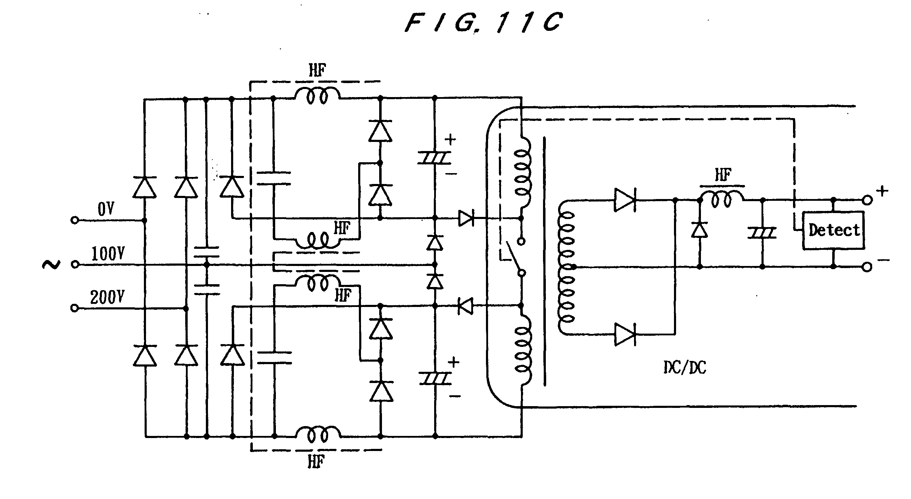

Fig. 10 shows an example of the combination of a popular push-pull type DC-DC converter with the two-transistor type to obtain output power with large capacity in this invented hybrid rectification circuit. This means that various applications are possible for this invented hybrid rectification circuit. Fig.11 (1), (2) and (3) shows circuit configurations when the circuits of Fig.6, Fig.7 and Fig.9 are commonly used with 100/115V and 200/230V supplies.

As precisely explained above, these circuits are able to realize AC to DC conversion with little harmonic component, and able to save 10-15% of input power over the conventional method and keep more than 85% of power factor by using single phase input hybrid rectification circuit to add the rerectified DC component of the ripple power (AC component) to the fundamental wave DC component. Besides, they can decrease the harmonic components to AC input current.

And they are also able to realize various single phase input hybrid rectifier circuits with little cost increase and with limitation free power capacity range.

## Claims

1. A single-phase-input rectifier comprising:
a single-phase full-bridge rectifier (D1-D4) which obtains a DC output voltage having a fundamental DC component by rectifying a single-phase AC input voltage; and
an LC filter consisting of a choke coil and a smoothing capacitor, said LC filter being provided to the DC output side of said single-phase full-bridge rectifier; and an auxiliary rectifier (D5, D6) **characterized in that** said
auxiliary rectifier obtains an auxiliary DC component by rectifying and smoothing a ripple voltage occurring on both sides of the choke coil of the LC filter and adds the auxiliary DC component to the fundamental DC component.

2. A single-phase-input rectifier as claimed in claim 1, further comprising a semiconductor switch (S) provided between the single-phase full-bridge rectifier and LC filter, wherein the DC output voltage is controlled by controlling said semiconductor switch with an on-off frequency higher than an input AC frequency thereof and controlling an on-off ratio thereof.

## Patentansprüche

1. Einphaseneingangsgleichrichter, umfassend:
einen Einphasenvollbrückengleichrichter (D1-D4), der eine Gleichstromausgangsspannung mit einer Grundschwingungsgleichstromkomponente durch Gleichrichten einer Einphasenwechselstromeingangsspannung erhält; und
ein LC-Filter, das eine Drosselspule und einen Glättungskondensator aufweist, wobei das LC-Filter an der Gleichstromausgangsseite des Einphasenvollbrückengleichrichters vorgesehen ist; und
einen Hilfsgleichrichter (D5, D6),
**dadurch gekennzeichnet, dass**
der Hifsgleichrichter eine Hilfsgleichstromkomponente durch Gleichrichten und Glätten einer Brummspannung erhält, die auf beiden Seiten der Drosselspule des LC-Filters auftritt, und die Hilfsgleichstromkomponente zur Grundschwingungsgleichstromkomponente hinzufügt.

2. Einphaseneingangsgleichrichter nach Anspruch 1, weiter umfassend einen Halbleiterschalter (S), der zwischen dem Einphasenvollbrückengleichrichter und LC-Filter vorgesehen ist, wobei die Gleichstromausgangsspannung gesteuert wird, indem der Halbleiterschalter mit einer Ein-Aus-Frequenz gesteuert wird, die höher als seine Eingangswechselstromfrequenz ist, und sein Verhältnis von Einschalt- zu Ausschalttzeit gesteuert wird.

## Revendications

1. Redresseur à entrée monophasée comprenant :
un redresseur en pont monophasé (D1 - D4) qui permet d'obtenir une tension de sortie continue (DC) possédant une composante continue fondamentale en redressant une tension d'entrée alternative (AC) monophasée ;
un filtre LC se composant d'une bobine d'arrêt et d'un condensateur de lissage, ledit filtre LC étant fourni du côté de la sortie continue dudit redresseur en pont monophasé ; et
un redresseur auxiliaire (D5, D6),
**caractérisé en ce que**
ledit redresseur auxiliaire permet d'obtenir une composante continue auxiliaire en redressant et en lissant une tension d'ondulation présente des deux côtés de la bobine d'arrêt du filtre LC et d'ajouter la composante continue auxiliaire à la composante continue fondamentale.

2. Redresseur en pont monophasé selon la revendication 1, comprenant de plus un commutateur à semiconducteur (S) fourni entre le redresseur en pont monophasé et le filtre LC, dans lequel la tension de sortie continue est commandée en commandant ledit commutateur à semiconducteur avec une fréquence par tout ou rien plus élevée qu'une fréquence alternative d'entrée de celui-ci et en commandant le rapport cyclique de celle-ci.
